# EUROPÄISCHE PATENTSCHRIFT

(11) **EP 3 551 850 B1**
(45) Veröffentlichungstag und Bekanntmachung des Hinweises auf die Patenterteilung: **31.03.2021**
(21) Anmeldenummer: 18704502.6
(22) Anmeldetag: 05.02.2018
(51) Int. Cl.: F01D 5/02, F01D 5/14

(54) **VERFAHREN ZUM MODIFIZIEREN EINER TURBINE**
METHOD FOR MODIFYING A TURBINE
PROCÉDÉ DE MODIFICATION D'UNE TURBINE

(30) Priorität: 10.02.2017 EP 17155610
(43) Veröffentlichungstag der Anmeldung: 16.10.2019
(73) Patentinhaber: Siemens Energy Global GmbH & Co. KG, 81739 München (DE)
(72) Erfinder: AHMAD, Fathi, 41564 Kaarst (DE); BUCHAL, Tobias, 40489 Düsseldorf (DE); GAND, Olivier, 40472 Düsseldorf (DE)
(86) Internationale Anmeldenummer: PCT/EP2018/052803
(87) Internationale Veröffentlichungsnummer: WO 2018/146046

(56) Entgegenhaltungen:
- DE-A1-102015 122 986
- US-A- 4 900 230
- US-A- 5 110 256
- US-A- 5 494 405

## Beschreibung

Die Erfindung betrifft ein Verfahren zum Modifizieren einer Turbine.

Unter thermischen Strömungsmaschinen (auch Turbomaschinen genannt) werden dabei Maschinen verstanden, bei denen eine Energieübertragung zwischen einem Arbeitsmedium (Flüssigkeit oder Gas) und der thermische Strömungsmaschinen in einem offenen Raum durch eine Strömung nach den Gesetzen der Fluiddynamik über den Umweg der kinetischen Energie erfolgt.

Eine derartige thermische Strömungsmaschine, wie z.B. eine Gasturbine, kann einen Verdichter und eine Turbine aufweisen. Der Verdichter ist zum Komprimieren von einem gasförmigen Arbeitsmedium ausgebildet, während die Turbine die innere Energie eines strömenden Arbeitsmediums in mechanische Energie umwandelt, die sie über eine Turbinenwelle abgibt.

Thermische Strömungsmaschinen weisen eine Beschaufelung auf, die die Gesamtheit der Schaufeln z.B. der Turbine umfasst. Unterschieden wird dabei zwischen Lauf- und Leitschaufeln. Ein Kranz von Laufschaufeln mit dem zugehörigen Kranz von Leitschaufeln wird als Stufe bezeichnet. Die Beschaufelung der Turbine und/oder des Verdichters kann mehrstufig sein.

Die Leitschaufeln sind fest in einem Gehäuse der Turbine eingebaut und leiten das Arbeitsmittel im optimalen Winkel auf die Laufschaufeln, die sich auf drehbaren Wellen befinden. Über die Laufschaufeln findet die Kopplung der mechanisch nutzbaren Leistung zwischen der thermischen Strömungsmaschine und dem Arbeitsmittel statt.

Bei der Angabe der Stufenanzahl der Turbine ist die Anzahl der Laufschaufelkränze maßgebend: Eine z.B. fünfstufige Turbine hat fünf Laufschaufelkränze. Die Leitschaufelkränze werden bei Verdichtern meist dem vorausgehenden Laufschaufelkranz zugeordnet, bei Turbinen meist dem nachfolgenden Laufschaufelkranz.

Schaufeln, d.h. Lauf- oder Leitschaufeln, weisen ein Schaufelblatt, eine an das Schaufelblatt angefügte Plattform, einen an die Plattform angefügten Fuß mit einem Befestigungsabschnitt zum Befestigen der Schaufel an dem Gehäuse bzw. an dem Rotor der Turbine auf.

Jedoch ist eine Anpassung einer derartigen thermischen Strömungsmaschine an veränderte Anforderungen, insbesondere an gesteigerte Leistungsanforderungen, nur mit erheblichem Aufwand möglich. So ist es aus der US 5,110,256 bekannt, zur Erhöhung der möglichen Maximalleistung sowohl die Laufschaufeln der letzten Dampfturbinenstufe als auch des zugehörigen Gehäuses zu ersetzen durch solche, die insgesamt eine größere Abströmfläche bereitstellen. Ein solcher Umbau ist jedoch vergleichsweise aufwändig, da beides nämlich Rotor und Gehäuse umgerüstet werden müssen. Eine weitere Umrüstung offenbart auch die US 5,494,405. Anlass der Umrüstung ist hier das Auftreten von Feuchtigkeit in großem Umfang, so dass mit dem Umbau eine Möglichkeit zur einfacheren Abführung der Feuchtigkeit geschaffen wird. Hierzu sollen die Laufschaufeln der letzten Stufe einer Dampfturbine axial nach stromabwärts neu positioniert werden, um den dadurch gewonnenen Bauraum für vergrößerte Drainageöffnungen zu verwenden.

Es besteht daher Bedarf daran, zumindest einen Weg aufzuzeigen, wie eine Turbine mit geringem Aufwand modifiziert werden kann. Erfindungsgemäß wird dies durch ein Verfahren gemäß Anspruch 1 gelöst.

Erfindungsgemäß wird zum Modifizieren einer Turbine mit in einem konisch ausgebildeten Gehäuse angeordneten Laufschaufelkränzen und Leitschaufelkränzen ein ursprünglicher Laufschaufelkranz an einer ersten Laufschaufelposition durch einen Austausch-Laufschaufelkranz an einer zweiten Laufschaufelposition ersetzt, wobei unter Beibehaltung des Gehäuses die zweite Laufschaufelposition entlang einer Erstreckungsrichtung einer Rotorwelle der Turbine in Strömungsrichtung eines die Turbine durchströmenden Arbeitsmediums beabstandet von der ersten Laufschaufelposition angeordnet ist. Hierdurch wird auf überraschend einfache Weise möglich, eine Turbine zu modifizieren, um sie an erhöhte Leistungsanforderungen anzupassen. Zugleich kann so die Machzahl des Arbeitsmediums reduziert werden.

Weiter weist der Austausch-Laufschaufelkranz einen größeren Außendurchmesser als der ursprüngliche Laufschaufelkranz auf. Deren Verwendung erfolgt ohne eine Veränderung des Gehäuses, d.h. unter Beibehaltung des konischen Öffnungswinkels. Dies ist allein deswegen möglich, da aufgrund der Gehäuse-Konizität und der nunmehr weiter stromab angeordneten Laufschaufeln der Abstand zwischen Rotorachse und einem Innendurchmesser des Gehäuses vergrößert ist, verglichen mit dem Abstand an der ersten Laufschaufelposition. Somit erfolgt eine Anpassung an einen bereits vorhandenen vergrößerten Innendurchmesser des Gehäuses, so dass eine besonders energieeffiziente Turbine einfach bereitgestellt wird.

Bevorzugt wird als Positionierelement ein separates Bauteil verwendet. So kann eine Festlegung der Position des Austausch-Laufschaufelkranzes ohne Modifikation der Rotorscheibe des Austausch-Laufschaufelkranzes erfolgen.

Bevorzugt wird ein als Distanzscheibe oder Ring ausgebildetes Positionierelement in der Rotorwelle zur Festlegung des Austausch-Laufschaufelkranzes an der zweiten Laufschaufelposition angeordnet. So kann auf besonders einfache Weise der Austausch-Laufschaufelkranz an der zweiten Laufschaufelposition festgelegt werden, sodass bei den Austausch-Laufschaufeln die axialen Position des inneren Endes des Schaufelblatts im Bezug auf die axiale Position des Schaufelfußes unverändert beibehalten werden kann wie bei den ursprünglichen Laufschaufeln. Dies verringert die Konstruktionsaufwendungen zur Ermittlung der Gestalt der Austausch-Laufschaufeln.

Bevorzugt wird ein als Distanzscheibe oder Ring ausgebildetes Positionierelement verwendet. So kann ein besonders einfach zu fertigendes Positionierelement verwendet werden.

Bevorzugt wird das Positionierelement an dem Austausch-Laufschaufelkranz angeformt. Somit entfällt eine Montage zusätzlicher Bauteile.

Bevorzugt wird das Positionierelement durch eine Verlängerung an einem Balkon eines Fußes einer Austausch-Laufschaufel des Austausch-Laufschaufelkranz gebildet. Im Detail werden die Schaufelfüße der Austausch-Laufschaufeln axial verändert, indem sie auf ihrer stromaufwärtigen Seite verlängert und auf ihrer stromabwärtigen Seite gekürzt werden. Die Rotorscheibe, in denen die Laufschaufeln in konventioneller Weise gehalten sind, kann demnach unverändert weiter verwendet werden, ohne dass in der Rotorwelle eine Distanzscheibe einlegen ist. Mithin sind die Austausch-Laufschaufeln sodann in der Nut der Rotorscheibe so angeordnet, dass deren Schaufelblatt axial weiter stromab angeordnet ist als es das Schaufelblatt der ursprünglichen Laufschaufeln war. Um einen vergrößerten Radialspalt an den Schaufelspitzen der Austausch-Laufschaufeln zu vermeiden, können deren Schaufelblätter spitzenseitig durch Auftragsschweißen oder andere geeignete additive Verfahren verlängert werden. So kann durch eine besonders einfache Abwandlung einer Laufschaufel das Positionierelement gebildet werden.

Bevorzugt erfolgt zur Festlegung des Austausch-Laufschaufelkranz an der zweiten Laufschaufelposition eine Verkürzung (in axialer Richtung auf der Stromabseite) eines Fußes einer Austausch-Laufschaufel des Austausch-Laufschaufelkranz. So kann durch eine besonders einfache Abwandlung eines Fußes einer Laufschaufel die Position der Laufschaufel neu bestimmt werden, wenn beispielsweise sie an einem stromabwärts gelegenen Anschlag positioniert werden soll.

Ferner gehören zur Erfindung eine derartig modifizierte Turbine und ein Laufschaufelkranz für eine derartige Turbine sowie eine Austausch-Laufschaufel für einen derartigen Austausch-Laufschaufelkranz.

Im Folgenden wird eine bevorzugte Ausführungsform des erfindungsgemäßen Verfahrens anhand der beigefügten schematischen Zeichnungen erläutert. Es zeigt:
Fig. 1 eine schematische Darstellung eines Abschnitts einer Turbine.
Fig. 2 eine schematischer Darstellung einer Modifikation der in Fig. 1 gezeigten Turbine.
Fig. 3 ein Detail der modifizierten Turbine.

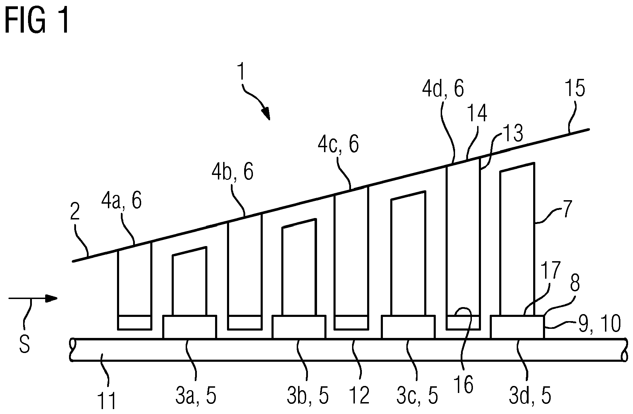

Es wird zunächst auf Fig. 1 Bezug genommen.

Dargestellt ist eine Turbine 1, die im vorliegenden Ausführungsbeispiel als Axialturbine 1 ausgebildet ist.

Die Turbine 1 ist im vorliegenden Ausführungsbeispiel vierstufig ausgebildet, d.h. die Turbine 1 weist eine Beschaufelung mit vier Laufschaufelkränzen 3a, 3b, 3c, 3d und drei Leitschaufelkränzen 4a, 4b, 4c, 4d auf.

Die Laufschaufelkränze 3a, 3b, 3c, 3d weisen jeweils eine Mehrzahl von Laufschaufeln 5 auf, während die Leitschaufelkränze 4a, 4b, 4c, 4d jeweils eine Mehrzahl von Leitschaufeln 6 aufweisen.

Die Laufschaufelkränze 3a, 3b, 3c, 3d und die Leitschaufelkränze 4a, 4b, 4c, 4d sind abwechselnd hintereinander in einem Gehäuse 2 in Strömungsrichtung eines Arbeitsmediums angeordnet, das die Turbine 1 durchströmt, beginnend mit dem Leitschaufelkranz 4a, gefolgt von dem Laufschaufelkranz 3a usw. Dabei ist das Gehäuse 2 konisch ausgebildet und weitet sich in Strömungsrichtung S des Arbeitsmediums auf.

Die Laufschaufeln 5 weisen jeweils ein Laufschaufelblatt 7, eine an das Schaufelblatt angefügte Plattform 8, einen an die Plattform 8 angefügten Fuß 9 mit einem Laufschaufel- Befestigungsabschnitt 10 auf.

Mit den jeweiligen Laufschaufel-Befestigungsabschnitten 10 sind die Laufschaufeln 5 an einer Rotorwelle 11 der Turbine 1 befestigt, in dem sie in jeweilige nutförmige Aufnahmen 12 der Rotorwelle 11 eingesetzt sind.

Die Leitschaufeln 6 weisen jeweils ein Leitschaufelblatt 3a, 3b, 3c, 3d und an ihren radial auswärtigen Enden einen Leitschaufel-Befestigungsabschnitt 14 auf, mit denen die Leitschaufeln 6 an einem ringförmigen Leitschaufelträger 15 befestigt sind. An ihren radial einwärtigen Enden weisen die Leitschaufeln 6 jeweils ein Dichtungselement 16 auf, das jeweils zwischen Laufschaufel-Befestigungsabschnitte 10 zweier benachbarter Laufschaufeln 5 angeordnet sind. Um eine Abdichtung zwischen den Laufschaufeln 5 und Leitschaufeln 6 zu verbessern weisen die Laufschaufel-Befestigungsabschnitte 10 jeweils Balkone 17 auf, die als Verlängerung an die jeweilige Plattform 8 ausgebildet sind, die sich in oder entgegen der Strömungsrichtung erstrecken.

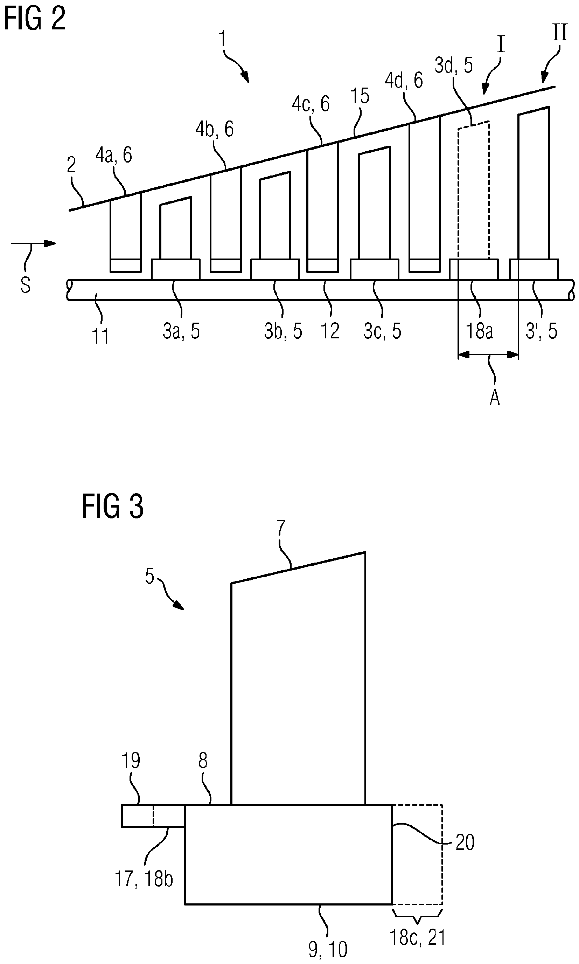

Es wird nun zusätzlich auf Fig. 2 Bezug genommen, um ein Ausführungsbeispiel eines Verfahrens zum Modifizieren der Turbine 1 zu erläutern.

Um die Turbine 1 zu modifizieren, z.B. um sie an erhöhte Leistungsanforderungen anzupassen, wird ein ursprünglicher Laufschaufelkranz 3a, 3b, 3c, 3d an einer ersten Laufschaufelposition I entfernt. Im vorliegenden Ausführungsbeispiel handelt es sich um den in Strömungsrichtung S letzten Laufschaufelkranz 3d an der ersten Laufschaufelposition I.

Es wird dann ein Austausch-Laufschaufelkranz 3'an einer zweiten Laufschaufelposition II montiert. Mit anderen Worten, der Austausch-Laufschaufelkranz 3' an der zweiten Laufschaufelposition II ersetzt den ursprünglichen Laufschaufelkranz 3d an der ersten Laufschaufelposition I. Dabei besteht der Austausch-Laufschaufelkranz 3' aus einer Mehrzahl an Austausch-Laufschaufeln 5'.

Dabei ist die zweite Laufschaufelposition II entlang einer Erstreckungsrichtung der Rotorwelle 11 der thermischen Strömungsmaschine 1 in Strömungsrichtung des Arbeitsmediums beabstandet von der ersten Laufschaufelposition I angeordnet, wobei der Abstand A derart bemessen ist, dass der Austausch-Laufschaufelkranz 3' sich noch innerhalb des Gehäuses 2 befindet. Der Abstand A beträgt im vorliegenden Ausführungsbeispiel zwischen 3 mm bis 15 mm, z.B. 10 mm.

Abweichend vom vorliegenden Ausführungsbeispiel kann auch vorgesehen sein, z.B. den zweiten Laufschaufelkranz 3b um den Abstand A zu verlagern. In diesem Fall werden der dritte Laufschaufelkranz 3c, der vierte Laufschaufelkranz 3d sowie der zwischen dem dritten Laufschaufelkranz 3c und vierten Laufschaufelkranz 3d angeordnete dritte Leitschaufelkranz 4c um den Abstand A in Strömungsrichtung S verlagert.

Der Austausch-Laufschaufelkranz 3' weist einen größeren Außendurchmesser als der ursprüngliche Laufschaufelkranz 3d auf, der an einen Innendurchmesser des Gehäuses 2 an der zweiten Laufschaufelposition II angepasst ist.

Um den Austausch-Laufschaufelkranz 3' an der zweiten Laufschaufelposition II festzulegen ist ein Positionierelement 18a vorgesehen. Das Positionierelement 18a ist im vorliegenden Ausführungsführungsbeispiel als Distanzscheibe oder Ring ausgebildet und auf die Rotorwelle 11 aufgeschoben worden, bevor der Austausch-Laufschaufelkranz 3' montiert wird.

Es wird nun unter Bezugnahme auf Fig. 3 ein zweites Ausführungsbeispiel des Positionierelements 18b erläutert.

Das Positionierelement 18b ist gemäß dem zweiten Ausführungsbeispiel an dem Austausch-Laufschaufelkranz 3' angeformt, z.B. in Form einer Verlängerung 19 des Balkons 17. Alternativ oder zusätzlich kann vorgesehen sein, dass das Positionierelement 18b durch eine rückwärtige Kontaktfläche 20 gebildet ist, die durch eine Verkürzung 21 des Fußes 9 entgegen der Strömungsrichtung S nach vorne verlagert ist. Mit anderen Worten, an der Rückseite des Fußes 8 wird Material abgetragen, sodass aufgrund des verkürzten Fußes 8 der Austausch-Laufschaufelkranz 3' in Strömungsrichtung S verlagert werden kann.

So kann mit geringem Aufwand eine Turbine 1 modifiziert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Modifizieren einer Turbine (1) mit in einem konisch ausgebildeten Gehäuse (2) angeordneten Laufschaufelkränzen (3a, 3b, 3c, 3d) und Leitschaufelkränzen (4a, 4b, 4c, 4d), bei dem ein ursprünglicher Laufschaufelkranz (3a, 3b, 3c, 3d) an einer ersten Laufschaufelposition (I) durch einen Austausch-Laufschaufelkranz (3') an einer zweiten Laufschaufelposition (II) ersetzt wird,
wobei unter Beibehaltung des Gehäuses (2) die zweite Laufschaufelpcsition (II) entlang einer Erstreckungsrichtung einer Rotorwelle der Turbine (1) in Strömungsrichtung (S) eines die Turbine (1) durchströmenden Arbeitsmediums beabstandet von der ersten Laufschaufelposition (I) angeordnet wird,
wobei der Austausch-Laufschaufelkranz (3') einen größeren Außendurchmesser als der ursprüngliche Laufschaufelkranz (3a, 3b, 3c, 3d) aufweist.

2. Verfahren nach Anspruch 1, wobei ein Positionierelement (18a) zur Festlegung des Austausch-Laufschaufelkranz an der zweiten Laufschaufelposition (II) verwendet wird und das Positionierelement ein separates Bauteil ist.

3. Verfahren nach Anspruch 1 bei dem ein als Distanzscheibe oder Ring ausgebildetes Positionierelement (18a, 18b) auf der Rotorwelle (11) zur Festlegung des Austausch-Laufschaufelkranzes (3') an der zweiten Laufschaufelposition (II) angeordnet wird.

4. Verfahren nach Anspruch 1,
wobei ein Positionierelement (18b) an dem Austausch-Laufschaufelkranz (3') angeformt wird

5. Verfahren nach Anspruch 4,
wobei das Positionierelement (18b) durch eine Verlängerung (19) an einem Balkon (17) eines Fußes (8) einer Austausch-Laufschaufel (5') des Austausch-Laufschaufelkranz (3') gebildet wird.

6. Verfahren nach einem der Ansprüche 4 oder 5,
wobei zur Festlegung des Austausch-Laufschaufelkranz (3') an der zweiten Laufschaufelposition (II) eine Verkürzung (21) eines Fußes (9) einer Austausch-Laufschaufel (5') des Austausch-Laufschaufelkranzes (3') erfolgt.

## Claims

1. Method for modifying a turbine (1) having, arranged in a housing (2) of conical form, rotor blade rings (3a, 3b, 3c, 3d) and guide blade rings (4a, 4b, 4c, 4d), in which method an original rotor blade ring (3a, 3b, 3c, 3d) at a first rotor blade position (I) is replaced by a replacement rotor blade ring (3') at a second rotor blade position (II),
wherein, while keeping the housing (2), the second rotor blade position (II) is arranged spaced apart from the first rotor blade position (I) along a direction of extent of a rotor shaft of the turbine (1) in the flow direction (S) of a working medium flowing through the turbine (1),
wherein the replacement rotor blade ring (3') has a larger outer diameter than the original rotor blade ring (3a, 3b, 3c, 3d) .

2. Method according to Claim 1,
wherein use is made of a positioning element (18a) for fixing the replacement rotor blade ring at the second rotor blade position (II), and the positioning element is a separate component.

3. Method according to Claim 1,
in which a positioning element (18a, 18b) designed in the form of a spacer or ring is arranged on the rotor shaft (11) for the purpose of fixing the replacement rotor blade ring (3') at the second rotor blade position (II).

4. Method according to Claim 1,
wherein a positioning element (18b) is formed integrally on the replacement rotor blade ring (3').

5. Method according to Claim 4,
wherein the positioning element (18b) is formed by an extension (19) on a balcony (17) of a root (8) of a replacement rotor blade (5') of the replacement rotor blade ring (3').

6. Method according to either of Claims 4 and 5,
wherein, for the purpose of fixing the replacement rotor blade ring (3') at the second rotor blade position (II), a shortening (21) of a root (9) of a replacement rotor blade (5') of the replacement rotor blade ring (3') is realized.

## Revendications

1. Procédé de modification d'une turbine (1) ayant des couronnes (3a, 3b, 3c, 3d) d'aubes mobiles et des couronnes (4a, 4b, 4c, 4d) d'aubes directrices disposées dans une enveloppe (2) de constitution conique, dans lequel on remplace une couronne (3a, 3b, 3c, 3d) d'aubes mobiles d'origine en une première position (I) d'aube mobile par une couronne (3') d'aubes mobiles de remplacement en une deuxième position (II) d'aube mobile
dans lequel, tout en conservant l'enveloppe (2), on met la deuxième position (II) d'aubes mobiles dans une direction dans laquelle s'étend un arbre de rotor de la turbine (1), dans le sens (S) d'écoulement d'un fluide de travail passant dans la turbine (1), à distance de la première position (I) d'aube mobile
dans lequel la couronne (3') d'aubes mobiles de remplacement a un diamètre extérieur plus grand que la couronne (3a, 3b, 3c, 3d) d'aubes mobiles d'origine.

2. Procédé suivant la revendication 1,
dans lequel on utilise un élément (18a) de mise en position pour fixer la couronne d'aubes mobiles de remplacement à la deuxième position (II) d'aube mobile et l'élément de mise en position est une pièce distincte.

3. Procédé suivant la revendication 1,
dans lequel on met un élément (18a, 18b) de mise en position constitué sous la forme d'un disque ou d'un anneau d'entretoisement sur l'arbre (11) du rotor pour la fixation de la couronne (3') d'aubes mobiles de remplacement en la deuxième position (II) d'aube mobile.

4. Procédé suivant la revendication 1,
dans lequel on forme un élément (18b) de mise en position sur la couronne (3') d'aubes mobiles de remplacement.

5. Procédé suivant la revendication 4,
dans lequel on forme l'élément (18b) de mise en position par un prolongement (19) sur un balcon (17) d'une emplanture (8) d'une aube (5') mobile de remplacement de la couronne (3') d'aubes mobiles de remplacement.

6. Procédé suivant l'une des revendications 4 ou 5,
dans lequel pour la fixation de la couronne (3') d'aubes mobiles de remplacement en la deuxième position (II) d'aube mobile, on produit un raccourcissement (21) d'une emplanture (9) d'une aube (5') mobile de remplacement de la couronne (3') d'aubes mobiles de remplacement.
